# EUROPEAN PATENT APPLICATION

(11) **EP 4 656 906 A1**
(43) Date of publication of application: **03.12.2025**
(21) Application number: 25177699.3
(22) Date of filing: 20.05.2025
(51) Int. Cl.: F16H 37/06, B62M 6/55

(54) **DRIVE DEVICE**

(30) Priority: 28.05.2024 JP 2024086445
(71) Applicant: Tsubakimoto Chain Co., Osaka 530-0005 (JP)
(72) Inventor: TAGUCHI, Tomoya, Osaka, 530-0005 (JP); FURUYA, Yuta, Osaka, 530-0005 (JP); HAYASHI, Takanori, Osaka, 530-0005 (JP); FUJIKAWA, Shiryu, Osaka, 530-0005 (JP); MORIMOTO, Takayuki, Osaka, 530-0005 (JP)
(74) Representative: dompatent

(57) **Abstract**

To provide a drive device that suppresses tilt and axial misalignment of a planetary carrier with a simple configuration.

The drive device has a main body portion, a main drive portion provided on the main body portion, and a drive assist portion. The main drive portion has a main shaft and a bevel gear that rotates integrally with the main shaft in at least one direction. The drive assist portion includes, as a reduction mechanism for the driving force, a sun gear which is connected to a drive source and to which a drive assist force is input, a planetary gear, an internal gear provided on the main body portion, and a planetary carrier rotatably supporting the planetary gear by a pin. The drive assist portion includes, as a transmission member for the driving force reduced by the reduction mechanism, a bevel pinion boss and a bevel pinion gear connected to the bevel pinion boss. The bevel gear and the bevel pinion gear are connected to each other. The transmission member includes an axial misalignment prevention member that ensures coaxial rotation of the planetary carrier and the bevel pinion boss.

## Description

### BACKGROUND OF THE INVENTION

### 1. Field of the Invention

The present invention relates to a drive device having a main body portion, a drive portion provided on the main body portion, and a drive assist portion.

### 2. Description of the Related Art

Conventionally, a drive device having a main body portion, a main drive portion provided on the main body portion, and a drive assist portion is known, for example, from Japanese Patent Application Publication No. H10-016874.

An electrically assisted vehicle 80 provided with the drive device described in Japanese Patent Application Publication No. H10-016874 has a main body portion (case body 93), and a main shaft (crankshaft 13) and a rotating member (output gear 98a) rotating integrally with the main shaft (crankshaft 13) as a main drive portion provided on the main body portion (case body 93). The vehicle 80 has an auxiliary drive shaft (rotating shaft 82a) as a drive assist portion, a reduction mechanism (planetary roller-type reduction mechanism 91) connected to the auxiliary drive shaft (rotating shaft 82a), and a transmission member (output gear member 118) that transmits the output of the reduction mechanism (planetary roller-type reduction mechanism 91) to the main shaft (crankshaft 13). The reduction mechanism (planetary roller-type reduction mechanism 91) has a planetary gear (planetary roller 111), a sun gear (rotating shaft 82a) to which a drive assist force is input from a drive source (electric motor 82), a planetary carrier (carrier 117) that rotatably supports the planetary gear (planetary roller 111), and an internal gear (outer ring 110) provided on the main body portion. The reduction mechanism (planetary roller reduction mechanism 91) and the transmission member (output gear member 118) are connected by a power transmission member (one-way clutch 120). The transmission member (output gear member 118) is connected to the rotating member (output gear 98a) so that the drive assist force from the drive source (electric motor 82) is transmitted to the main shaft (crankshaft 13).

Thus, it is possible to output the resultant force of the driving force input to the main shaft (crankshaft 13) and the drive assist force from the drive source (electric motor 82).

### SUMMARY OF THE INVENTION

In the drive device known in Japanese Patent Application Publication No. H10-016874 and the like, the only support member for the carrier 117 connected to the planetary roller reduction mechanism 91 is the one-way clutch 120.

Therefore, for example, when the drive device is mounted on an electrically assisted bicycle 80 and held horizontally, the structure of the one-way clutch 120 creates slight gaps between the components of the one-way clutch 120, which can cause the carrier 117 to tilt from its original mounting position or cause misalignment of the axis of the rotating shaft.

Furthermore, if the electric motor 82 rotates with the carrier 117 tilted or with its axis misaligned, the meshing state between the rotating shaft 82a, planetary roller 111, and outer ring 110 will not be uniform, which may result in a decrease in the efficiency of power transmission from the electric motor 82, the generation of periodic abnormal noise accompanying the rotation of the electric motor 82, and the occurrence of abnormal wear on the tooth surface.

Furthermore, there is a risk that the tilting or axial misalignment of the carrier 117 may cause poor meshing or abnormal wear of the one-way clutch 120.

The present invention has been made to solve these problems, and an object thereof is to provide a drive device with a simple configuration that suppresses the tilting or axial misalignment of the planetary carrier, has good power transmission efficiency, and is quiet and has excellent traveling stability.

The drive device of the present invention solves the above-mentioned problem by providing a drive device including a main body portion, a main drive portion provided on the main body portion, and a drive assist portion that assists the drive of the main drive portion, wherein the main drive portion has a main shaft supported by the main body portion and a rotating member that rotates integrally with the main shaft in at least one direction, the drive assist portion has an auxiliary drive shaft, a reduction mechanism connected to the auxiliary drive shaft, and a transmission member that transmits an output of the reduction mechanism to the main shaft, the reduction mechanism has a planetary gear, a sun gear to which a drive assist force is input from a drive source, a planetary carrier that rotatably supports the planetary gear, and an internal gear provided on the main body portion, the planetary carrier and the transmission member are connected by a power transmission member, the transmission member is connected to the rotating member so that the drive assist force from the drive source is transmitted to the main shaft, and the transmission member has an axial misalignment prevention member that ensures coaxial rotation of the planetary carrier and the transmission member.

According to the invention of claims 1 and **7,** there is provided a drive device including a main body portion, a main drive portion provided on the main body portion, and a drive assist portion that assists the drive of the main drive portion, wherein the main drive portion has a main shaft supported by the main body portion and a rotating member that rotates integrally with the main shaft in at least one direction, the drive assist portion has an auxiliary drive shaft, a reduction mechanism connected to the auxiliary drive shaft, and a transmission member that transmits an output of the reduction mechanism to the main shaft, the reduction mechanism has a planetary gear, a sun gear to which a drive assist force is input from a drive source, a planetary carrier that rotatably supports the planetary gear, and an internal gear provided on the main body portion, the planetary carrier and the transmission member are connected by a power transmission member, the transmission member is connected to the rotating member so that the drive assist force from the drive source is transmitted to the main shaft, and the transmission member has an axial misalignment prevention member that ensures coaxial rotation of the planetary carrier and the transmission member. Thus, it is possible to suppress axial misalignment of both rotating shafts of the planetary carrier and the transmission member when the drive assist force is input from the drive source and the planetary carrier and the transmission member rotate together.

Due to this, the meshing state of the reduction gear mechanism and each part of the transmission member is made uniform, reducing power transmission loss, suppressing abnormal noise, and reducing wear on rotating parts.

According to the configuration described in claim **2,** the rotating member has a bevel gear, the transmission member has a bevel pinion gear, the bevel pinion gear is connected to the bevel gear, the planetary carrier and the transmission member are connected by the power transmission member, and the axial misalignment prevention member ensures coaxial rotation of the planetary carrier and the transmission member. Thus, the power input from the drive source is transmitted to the main shaft reliably and with reduced loss, and the parts that ensure the coaxial rotation are brought closer to each other, thereby preventing axial misalignment more effectively.

According to the configuration described in claim 3, the axial misalignment prevention member is held between an inner peripheral surface side of the main body portion and an outer peripheral surface side of the planetary carrier. Thus, axial misalignment in a direction parallel to the rotation axis of the planetary carrier can be effectively suppressed.

In addition, since the axial misalignment can be suppressed without expanding the size of the main body portion, the weight of the main body portion can be reduced and the storage space can be reduced.

According to the configuration described in claim 4, the axial misalignment prevention member is configured with a bearing. Thus, the axial misalignment of the planetary carrier can be suppressed without creating resistance to the rotational movement of the planetary carrier.

According to the configuration described in claim 5, the planetary carrier has a boss portion formed on a side surface thereof, and the boss portion functions as a support portion for the power transmission member. Thus, the transmission member can be provided inside the main body portion, the overall length of the transmission member can be shortened, and the transmission member can be securely held by bringing the outer diameter of the bearing as close as possible to the inner diameter of the drive assist portion side of the main body portion. Therefore, the axial misalignment of the transmission member can be further suppressed.

According to the configuration described in claim **6,** the power transmission member is configured with a cam clutch. Thus, the drag resistance of the electric motor can be suppressed when the electric motor does not input the drive assist force.

According to the configuration described in claim **8,** the main shaft is a crankshaft to which a pedal depression force is input. Thus, the traveling vehicle can assist the driver's pedal depression force.

### BRIEF DESCRIPTION OF THE DRAWINGS

FIG. 1 is a perspective view of a cross section parallel to a main shaft of a drive device 100 according to an embodiment of the present invention;
FIG. 2 is a perspective view of a cross section perpendicular to the main shaft of the drive device 100 according to an embodiment of the present invention;
FIG. 3 is a perspective view of the drive device 100 according to an embodiment of the present invention from the sprocket side;
FIG. 4 is a perspective view of the drive device 100 according to an embodiment of the present invention from the drive assist portion side; and
FIG. 5 is a partially enlarged view of the drive assist portion in a cross section parallel to the main shaft of the drive device 100 according to an embodiment of the present invention.

### DESCRIPTION OF THE PREFERRED EMBODIMENTS

Below, a drive device 100 according to an embodiment of the present invention will be described based on the drawings.

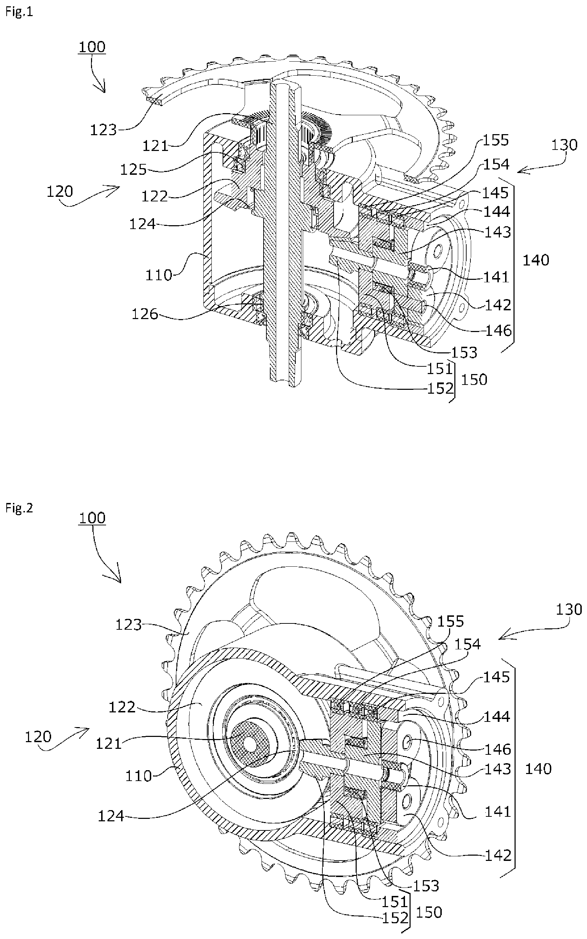

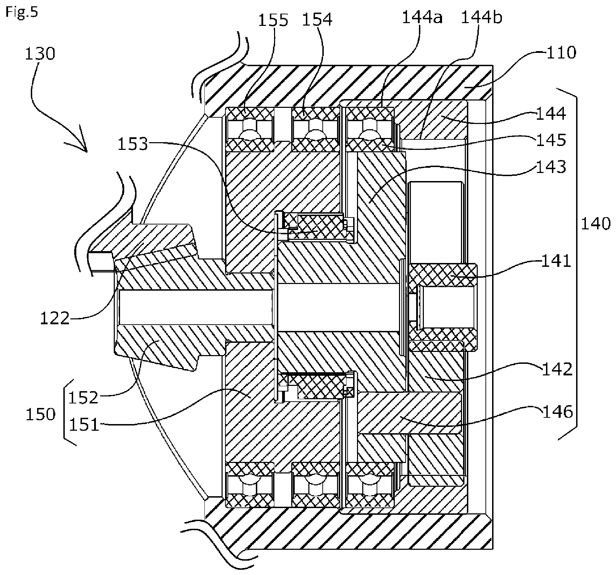

As shown in FIGS. 1 to **5****,** the drive device 100 according to an embodiment of the present invention has a main body portion 110, a main drive portion 120 provided on the main body portion 110, and a drive assist portion 130.

The drive source and the gear teeth are not shown.

The main drive portion 120 has a main shaft 121 rotatably held by a bearing 126 press-fitted into the main body portion 110, and a bevel gear 122, which is a rotating member that rotates integrally with the main shaft 121 and is rotatably held by a bearing 125 press-fitted into the main body portion 110.

The main shaft 121 has a through-hole in the longitudinal direction, and female threads are provided on the inner surface of both ends of the through-hole.

Both ends of the main shaft 121 are rectangular prism-shaped, and cranks can be attached to both ends.

The main shaft 121 is inserted into a through-hole provided in the direction of the central axis of rotation, and the bevel gear 122 is connected to the main shaft 121 so that it can rotate integrally with the main shaft 121 in at least one direction by a one-way clutch 124. When the main shaft 121 rotates in the direction opposite to the driving direction, the bevel gear 122 can rotate freely.

A sprocket 123 is attached to one end of the bevel gear 122 so that it can rotate integrally with the bevel gear 122. When the main shaft 121 rotates, the bevel gear 122 rotates via the one-way clutch 124, and the sprocket 123 also rotates.

On the other hand, when the main shaft 121 rotates in the direction opposite to the driving direction, the one-way clutch 124 causes the main shaft 121 to rotate freely, and the bevel gear 122 does not rotate integrally with the main shaft 121. Therefore, no driving force is transmitted to the sprocket 123, and the sprocket 123 does not rotate.

The drive assist portion 130 has an auxiliary drive shaft (not shown) connected to the drive source, a reduction mechanism 140 connected to the auxiliary drive shaft, and a transmission member 150 that transmits the output of the reduction mechanism 140 to the main shaft.

The reduction mechanism 140 includes a sun gear 141 to which the auxiliary driving force of the auxiliary drive shaft is input, a planetary gear 142 to which the auxiliary driving force is transmitted from the sun gear 141, an internal gear 144 provided on the main body portion 110 and rotatably holding the planetary gear 142, and a planetary carrier 143 that rotatably supports the planetary gear 142 by a pin 146.

The sun gear 141 has a through-hole to which a drive source can be connected. When the drive source rotates and the auxiliary driving force is input, the sun gear 141 can rotate integrally with the drive source at the same rotation speed.

The planetary gear 142 has a through-hole at the position of the central axis of rotation, through which the pin 146 is inserted, and is engaged with the sun gear 141. When the sun gear 141 rotates, the planetary gear 142 also rotates integrally with the drive source, and can transmit the auxiliary driving force from the drive source.

The internal gear 144 is provided inside the main body portion 110, and has a gear portion 144b and a holding portion 144a for a bearing 145, which is an axial misalignment prevention member, on the cylindrical inner portion. The internal gear 144 rotatably supports the planetary gear 142 and holds the bearing 145, which is an axial misalignment prevention member.

The internal gear 144 is fixed inside the main body portion 110, so it does not rotate by itself. When the planetary gear 142 rotates, the planetary gear 142 performs planetary movement, rotating around the sun gear 141 while rotating about the pin 146.

The transmission member 150 that transmits the output of the reduction mechanism 140 to the main shaft 121 has a bevel pinion boss 151 and a bevel pinion gear 152 connected to the bevel pinion boss 151.

The planetary carrier 143 of the reduction mechanism 140 and the bevel pinion boss 151 of the transmission member 150 are connected by a cam clutch 153, which is a power transmission member.

The bearing 145 as an axial misalignment prevention member is held between the inner peripheral surface side of the main body portion 110, **i.e.,** the inner peripheral surface side of the internal gear 144, and the outer peripheral surface side of the planetary carrier 143 to ensure coaxial rotation of the planetary carrier 143 and the bevel pinion boss 151. In this way, the tilting and axial misalignment when the planetary carrier 143 is attached or rotates can be suppressed, and the planetary carrier 143 can rotate inside the bearing 145.

In this embodiment, the bearing 145 is provided as an axial misalignment prevention member for the planetary carrier 143 and the bevel pinion boss 151, which are rotating parts, and the planetary carrier 143 is held by two surfaces, the inner ring of the cam clutch 153 and the inner ring of the bearing 145. Thus, the axial misalignment and tilting of the central axis of rotation of the planetary carrier 143 and the central axis of rotation of the bevel pinion boss 151 can be prevented, ensuring coaxial rotation.

The bearing 145 as an axial misalignment prevention member has an outer ring held by the holding portion 144a of the bearing 145 of the internal gear 144 provided on the inner peripheral surface side of the main body portion 110, while the inner ring of the bearing 145 rotatably holds the planetary carrier 143.

The bearing 145 has an outer ring held by the internal gear holding portion 144a provided on the inner peripheral surface of the main body portion 110. Thus, there is no need to provide a separate rib on the inner surface of the main body portion 110 or perform additional processing. The outer ring is held by the holding portion 144a of the bearing 145 of the internal gear 144. Thus, the bearing 145 can be easily installed.

Thus, it is possible to reduce the amount of material used in the main body portion 110, which in turn reduces the weight of the main body portion, and shortens the machining process.

Furthermore, since the outer diameter of the bearing 145 can be increased to the inner diameter of the main body portion 110, the outer diameter of the bearing 145 can be set large, and the planetary carrier 143 can be held over a larger area, effectively preventing the axial misalignment, and also preventing the axial misalignment of the planetary carrier 143 regardless of the orientation of the drive device 100.

The bearing 145 holds the planetary carrier 143, preventing the axial misalignment of the planetary carrier 143 during rotation, and the planetary carrier 143 and the bevel pinion boss 151 rotate on the same rotation axis, reducing loss due to power transmission of the drive assist force input from the drive source.

In addition, the rotation axis of the planetary carrier 143 is on the same axis as the rotation axis of the bevel pinion boss 151. Thus, it is possible to suppress vibrations caused by the planetary carrier 143 rotating in a tilted state and make the meshing state between the planetary gear 142 connected to the planetary carrier 143 by the pin 146 and the internal gear 144, and between the planetary gear 142 and the sun gear 141 uniform. Moreover, it is possible to suppress periodic noise and abnormal noise caused by the meshing of the gears and reduce wear on the tooth surfaces of each gear.

Furthermore, as for the cam clutch 153, the axial misalignment and tilting of the planetary carrier 143 held by the inner ring of the cam clutch 153 are prevented. Thus, it is possible to make contact between the components uniform when the cam clutch 153 is engaged, reduce loss due to power transmission, suppress periodic noise and abnormal noise, and reduce wear of each part during driving and idling, leading to a longer life of the cam clutch 153.

The cam clutch 153 can further reduce the transmission loss of the drive assist force input from the drive source due to its responsiveness, and can reliably hold the boss portion of the planetary carrier 143 with the cam.

At this time, the planetary carrier 143 is held by the bearing 145 as an axial misalignment prevention member, and then, the boss portion of the planetary carrier 143 and the cam clutch 153, which is a cam clutch are held. Thus, the planetary carrier 143 can be prevented from being held in a tilted or axially misaligned state.

In this embodiment, the power transmission member is the cam clutch 153, but a one-way clutch with another structure may be used.

The planetary carrier 143 is cylindrical with a through-hole in the center, and is rotatably held inside the main body portion 110 by the bearing 145 as an axial misalignment prevention member and supports the planetary gear 142 via the pin 146. Thus, the planetary carrier 143 itself can rotate when the planetary gear 142 performs planetary movement.

In addition, the planetary carrier 143 has a boss portion formed on the side surface thereof, and the cam clutch 153 is inserted on the outer peripheral surface side of the boss portion.

The drive assist portion 130 also has the bevel pinion boss 151 and the bevel pinion gear 152 connected to the bevel pinion boss 151 as a transmission member for the driving force reduced by the reduction mechanism.

The bevel pinion boss 151 has a through-hole and a recess, and the recess holds the cam clutch 153 inserted into the boss portion of the planetary carrier 143 from the outer peripheral surface side.

The bevel pinion boss 151 is held securely without tilting or axial misalignment by two bearings 154 and 155 press-fitted inside the main body portion 110, and can rotate coaxially with the planetary carrier 143 held by the bearings 145.

The bevel pinion gear 152 has a through-hole and is connected to the through-hole provided in the bevel pinion boss 151. Thus, the bevel pinion gear 152 is held so as to be rotatable integrally with the bevel pinion boss 151.

The bevel pinion gear 152 is also connected to the bevel gear 122 so as to be able to transmit power.

Next, the operation of the drive device 100 according to the embodiment of the present invention during driving will be described with reference to FIG. **1****.**

First, the case where power is input to the main shaft 121 of the main drive portion 120 in the driving direction, and no power is input from the drive source to the drive assist portion 130 will be described.

Since the main shaft 121 and the bevel gear 122 are connected by the one-way clutch 124 so that they can rotate integrally in at least one direction, when power is input in the driving direction, the bevel gear 122 rotates integrally with the main shaft 121, and the sprocket 123 connected to the bevel gear 122 also rotates integrally.

Then, power is transmitted from the bevel gear 122 to the bevel pinion gear 152 connected to the bevel gear 122, so the bevel pinion gear 152 also performs rotational movement.

Since the bevel pinion gear 152 and the bevel pinion boss 151 are connected, the bevel pinion boss 151 also rotates integrally with the rotation of the bevel pinion gear 152.

However, since the bevel pinion boss 151 and the planetary carrier 143 are connected by the cam clutch 153, even if the bevel pinion boss 151 rotates, the cam clutch 153 rotates freely and power is not transmitted to the planetary carrier 143.

As a result, when power is not input from the drive source, the cam clutch 153 rotates freely, and the planetary carrier 143, the planetary gear 146, the sun gear 141, and the drive source do not rotate, so that the power input to the main shaft 121 is not lost.

Next, a case where power is input to the main shaft 121 of the main drive portion 120 in the drive direction and power from the drive source is input to the drive assist portion 130 will be described.

When power is input to the main shaft 121 in the driving direction, power is transmitted in the order of the one-way clutch 124, the bevel gear 122, and the bevel pinion gear 152, and the bevel pinion boss 151 connected to the bevel pinion gear 152 also rotates integrally.

Here, since power from the drive source is input to the sun gear 141, the planetary gear 142, which is connected to the sun gear 141 and rotatably held by the internal gear 144, performs planetary movement.

Then, the planetary carrier 143, which is connected to the planetary gear 142 by the pin 146, also performs rotational movement.

Here, when the rotation speed of the planetary carrier 143 is slower than the rotation speed of the bevel pinion boss 151, the bevel pinion boss 151 and the planetary carrier 143 are connected by the cam clutch 153. Thus, the power transmitted from the drive source to the planetary carrier 143 is not transmitted to the bevel pinion boss 151, and the drive assist force input from the drive source is not transmitted to the main shaft 121.

On the other hand, when the rotation speed of the planetary carrier 143 is faster than the rotation speed of the bevel pinion boss 151, the bevel pinion boss 151 and the planetary carrier 143 are connected by the cam clutch 153. Thus, the planetary carrier 143 increases the rotation speed of the bevel pinion boss 151, and the power transmitted from the drive source is transmitted to the bevel pinion boss 151, assisting the rotational movement of the main shaft 121.

In other words, when the rotation speed of the planetary carrier 143 exceeds the rotation speed of the bevel pinion boss 151, the power input from the drive source is transmitted to the bevel pinion boss 151, assisting the rotational movement of the main shaft 121.

While the embodiments of the present invention have been described in detail, the present invention is not limited to the above embodiments, and various design changes can be made without departing from the invention described in the claims.

In the above embodiment, the transmission member is configured with a bevel pinion boss and a bevel pinion gear, the bevel pinion boss has a portion that constitutes the outer ring of the cam clutch, the planetary carrier has a portion that constitutes the inner ring of the cam clutch, and the outer periphery of the bevel pinion boss is rotatably supported by bearings. However, the shaft extending directly from the bevel pinion gear may have a portion that constitutes the inner ring of the cam clutch, the planetary carrier may have a portion that constitutes the outer ring of the cam clutch, and the directly extending shaft may be rotatably supported by bearings.

The drive device according to the present invention can be used as various drive devices, such as vehicles using electric motors as drive sources, devices for carrying luggage, and carts.

In the above-mentioned embodiment, the rotation axis of the bevel pinion gear 152 and the main shaft 121 are in a positional relationship that is perpendicular to each other, but they may be connected so as to be capable of transmitting power. For example, the rotation axis direction of the bevel pinion gear 152 and the rotation axis direction of the main shaft 121 may be arranged parallel to each other, and the bevel pinion gear 152 and the main shaft 121 may be connected by a chain, a rod, or the like.

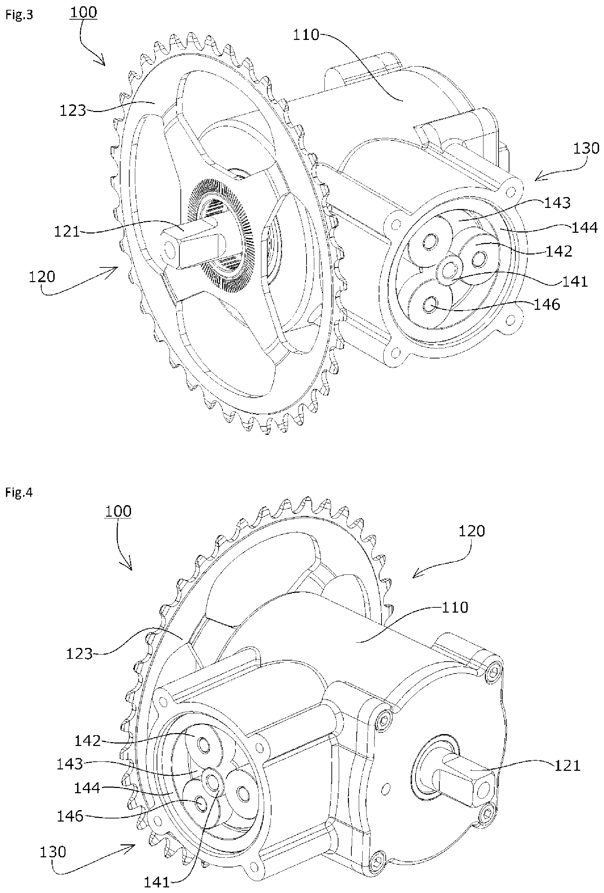

In addition, in FIGS. 3 and 4, the drive assist portion 130 has three planetary gears 142, but there is no restriction on the number of planetary gears 142, and the number may be three or more.

In the above-mentioned embodiment, the main shaft 121 and the bevel gear 122, which is a rotating member, are configured to rotate integrally in at least one direction via the one-way clutch 124, but they may be configured to rotate integrally in both directions without the one-way clutch 124.

The one-way clutch 124 may be of any structure, such as a cam clutch.

## Claims

1. A drive device comprising a main body portion, a main drive portion provided on the main body portion, and a drive assist portion that assists the drive of the main drive portion, wherein
the main drive portion has a main shaft supported by the main body portion and a rotating member that rotates integrally with the main shaft in at least one direction,
the drive assist portion has an auxiliary drive shaft, a reduction mechanism connected to the auxiliary drive shaft, and a transmission member that transmits an output of the reduction mechanism to the main shaft,
the reduction mechanism has a planetary gear, a sun gear to which a drive assist force is input from a drive source, a planetary carrier that rotatably supports the planetary gear, and an internal gear provided on the main body portion,
the planetary carrier and the transmission member are connected by a power transmission member,
the transmission member is connected to the rotating member so that the drive assist force from the drive source is transmitted to the main shaft, and
the transmission member has an axial misalignment prevention member that ensures coaxial rotation of the planetary carrier and the transmission member.

2. The drive device according to claim 1, wherein
the rotating member has a bevel gear,
the transmission member has a bevel pinion gear,
the bevel pinion gear is connected to the bevel gear,
the planetary carrier and the transmission member are connected by the power transmission member, and
the axial misalignment prevention member ensures coaxial rotation of the planetary carrier and the transmission member.

3. The drive device according to claim **1,** wherein
the axial misalignment prevention member is held between an inner peripheral surface side of the main body portion and an outer peripheral surface side of the planetary carrier.

4. The drive device according to claim **1,** wherein
the axial misalignment prevention member is configured with a bearing.

5. The drive device according to claim **1,** wherein
the planetary carrier has a boss portion formed on a side surface thereof, and
the boss portion functions as a support portion for the power transmission member.

6. The drive device according to claim **1,** wherein
the power transmission member is configured with a cam clutch.

7. A traveling vehicle comprising the drive device according to any one of claims 1 to 6.

8. The traveling vehicle according to claim 7, wherein
the main shaft is a crankshaft to which a pedal depression force is input.
